# EUROPÄISCHE PATENTSCHRIFT

(11) **EP 3 003 844 B1**
(45) Veröffentlichungstag und Bekanntmachung des Hinweises auf die Patenterteilung: **06.05.2020**
(21) Anmeldenummer: 14728420.2
(22) Anmeldetag: 25.04.2014
(51) Int. Cl.: B63B 21/66, B63G 8/42, G01V 1/38, B63G 8/39

(54) **VERBRINGVORRICHTUNG UND VERFAHREN ZUM AUSBRINGEN UND EINHOLEN EINES SCHLEPPSONARS**
REELING DEVICE AND METHOD FOR RELEASING AND RETRIEVING A TOWED ARRAY SONAR
DISPOSITIF DE DÉPLOIEMENT ET PROCÉDÉ POUR DÉROULER ET ENROULER UN SONAR REMORQUÉ

(30) Priorität: 30.05.2013 DE 102013105593
(43) Veröffentlichungstag der Anmeldung: 13.04.2016
(73) Patentinhaber: ATLAS ELEKTRONIK GmbH, 28309 Bremen (DE)
(72) Erfinder: BARG, Ulrich, 28279 Bremen (DE); LICHT, Joachim, 28201 Bremen (DE)
(74) Vertreter: thyssenkrupp Intellectual Property GmbH
(86) Internationale Anmeldenummer: PCT/DE2014/100143
(87) Internationale Veröffentlichungsnummer: WO 2014/190973

(56) Entgegenhaltungen:
- EP-A2- 0 877 262
- WO-A1-2008/043823
- WO-A1-2013/068497
- WO-A1-2014/026817
- US-A1- 2009 154 295

## Beschreibung

Die Erfindung betrifft eine Verbringvorrichtung zum Ausbringen und Einholen eines im Wasser geschleppten Schleppsonars nach dem Oberbegriff von Anspruch 1. Ferner betrifft die Erfindung ein Verfahren zum Ausbringen und Einholen eines Schleppsonars nach dem Oberbegriff von Anspruch 12.

WO 2008/043823 A1 zeigt eine Vorrichtung zum automatischen Ankoppeln und Abkoppeln eines Schleppsonars.

Schleppsonare werden herkömmlicher Weise zur seismischen Vermessung des Meeresgrundes von Forschungsfahrzeugen aus oder zur Ortung von Wasserfahrzeugen eingesetzt, indem Peilung, Entfernung, Geschwindigkeit und Kurs eines Ziels mittels einer Sonaranlage bestimmt werden. Dabei wird das Schleppsonar von einem Schleppfahrzeug durch das Wasser gezogen.

Ein derartiges Schleppsonar weist einen Schleppstrang als akustischen Empfangsteil auf, mit einer Vielzahl in einer elastischen, schlauchförmigen Hülle angeordneter Hydrophone. Ferner weist das Schleppsonar einen Schleppkörper als akustischen Sendeteil auf, wie er beispielsweise in DE 195 16 727 C1 dargestellt ist. Der Schleppstrang und der Schleppkörper sind über ein Zugkabel mechanisch und elektrisch bzw. optisch mit dem Schleppfahrzeug verbunden. Schließlich können an dem Schleppsonar ein Endstück zur Streckung des Schleppstrangs durch Erzeugen einer der Schlepprichtung entgegengesetzten Zugkraft und ein oder mehrere Dämpfungsmodule zur akustischen Entkopplung des Schleppstrangs vom Zugkabel und von dem Endstück angeordnet sein. Zum Ausbringen und Einholen des Schleppsonars vom Schleppfahrzeug aus ist an Bord des Schleppfahrzeugs eine Verbringvorrichtung vorhanden. DE 197 19 306 C2 zeigt eine Verbringvorrichtung, bei der der Schleppkörper beim Ausbringen bzw. Einholen des Schleppsonars manuell von einem Bediener mit dem Schleppstrang verbunden bzw. gelöst wird.

Aufgrund des großen Gewichts und des geringen zulässigen Krümmungsradius' des Schleppsonars ist eine große und schwere Windenkonstruktion erforderlich, um das gesamte Schleppsonar sicher und stabil auf dem Schleppfahrzeug zu lagern. Insbesondere bei kleinen Wasserfahrzeugen bereitet die Unterbringung des Schleppsonars an Deck große Platzprobleme, so dass für einen Bediener beim Ausbringen und Einholen des Schleppsonars kaum Bewegungsraum bleibt. Zusätzlich gefährdet unter Umständen starker Seegang die Sicherheit des Bedieners, da das An- und Abkoppeln des Schleppkörpers an der Heckkante des Wasserfahrzeugs vorgenommen wird.

Der Erfindung liegt daher das Problem zugrunde, die Verbringvorrichtung und das Verfahren zum Ausbringen und Einholen des Schleppsonars derart zu verbessern, dass ein Ausbringen und Einholen des Schleppsonars mit minimalem Bedienereingriff einfach und gefahrlos durchführbar ist.

Die Erfindung löst dieses Problem mit den Merkmalen einer Verbringvorrichtung zum automatischen Ausbringen und Einholen eines im Wasser geschleppten Schleppsonars gemäß Anspruch 1 sowie eines Verfahrens zum automatischen Ausbringen und Einholen eines im Wasser geschleppten Schleppsonars gemäß Anspruch 12.

Die erfindungsgemäße Verbringvorrichtung verfügt dazu über eine Anschlusseinheit, welche derart ausgestaltet ist, um einen Schleppkörper des Schleppsonars an einem Zugkabel des Schleppsonars anzukoppeln bzw. von dem Zugkabel abzukoppeln. Die Anschlusseinheit weist zwei voneinander beabstandete Verbindungseinheiten auf, welche zum Herstellen von jeweils einer lösbaren

Verbindung zwischen dem Schleppkörper und dem Zugkabel verwendbar sind. Es handelt sich dabei um eine mechanische Verbindung sowie um eine elektrische und/oder optische Verbindung.

Mit einer derartigen Anschlusseinheit ist vorteilhaft ein vollautomatisches Ausbringen bzw. Einholen des gesamten Schleppsonars mit Schleppkörper und Schleppstrang möglich. Die erfindungsgemäße Verbringvorrichtung sorgt daher vorteilhaft für mehr Sicherheit für einen Bediener beim Ausbringen und Einholen des Schleppsonars, da nunmehr im normalen Betrieb kein manueller Eingriff des Bedieners notwendig ist.

In einer bevorzugten Ausführungsform der Erfindung weist der Schleppkörper eine Gleitführung auf, um den Schleppstrang und das Zugkabel durch den Schleppkörper zu führen. Dadurch dient der Schleppkörper vorteilhaft als Führungsteil beim Ausbringen und Einholen eines als akustischen Empfangsteil dienenden Schleppstrangs, um diesen ohne Beschädigung über die Heckkante des Schleppfahrzeugs laufen zu lassen.

Gemäß einer weiteren bevorzugten Ausführungsform der Erfindung weist die Gleitführung eine Tubusform mit zwei axialen Öffnungen auf, wobei die heckseitige Öffnung konusförmig erweitert ist. Die konusförmige Erweiterung der Öffnung in der Gleitführung dient vorteilhaft zur Vermeidung einer zu starken Krümmung des Schleppstrangs und des Zugkabels beim Ausbringen oder Einholen.

In einer weiteren bevorzugten Ausführungsform der Erfindung ist ein motorbetriebenes Gummitransportband hinter dem Schleppkörper angeordnet, welches den Ausbring- und Einholvorgang des Schleppstrangs unterstützt. Um ein Abknicken des Schleppstrangs zu vermeiden und somit eine Beschädigung des Schleppstrangs zu umgehen, weist das Gummitransportband eine gewölbte Oberfläche auf, die dem minimalen Krümmungsradius des Schleppstrangs angepasst ist. Das Gummitransportband dient als Führung für den Schleppstrang und lässt sich nach dem Ausbringen des kompletten Schleppstrangs seitwärts schwenken.

Gemäß einer weiteren bevorzugten Ausführungsform der Erfindung ist die erste Verbindungseinheit als ein Steckverbinder mit zwei Verbindungselementen ausgestaltet, um eine elektrische und/oder optische Verbindung zwischen dem Schleppkörper und dem Zugkabel herzustellen. Dabei ist ein Verbindungselement fest am Zugkabel angeordnet und ein Verbindungselement im Schleppkörper angeordnet, wobei das im Schleppkörper angeordnete Verbindungselement nachträglich in den Schleppkörper eingebracht oder im Herstellungsverfahren der Gleitführung bereits berücksichtigt werden kann.

Bevorzugt weisen die beiden Verbindungselemente mindestens einen Stecker als männlichen Teil und mindestens eine Buchse als weiblichen Teil des Steckverbinders für eine elektrische Anbindung des Schleppkörpers an dem Zugkabel auf. Die Verbindungselemente können jedoch auch Steckverbinder beiderlei Geschlechts oder geeignete Ausführungsformen zur optischen Signalübertragungsverbindung für Lichtwellenleiter zum optischen Anbinden des Schleppkörpers an dem Zugkabel aufweisen. Auch mehrpolige Steckverbinder sowie mehrere Kontaktstellen, insbesondere mehrere Stecker-/Buchse-Einheiten, der beiden Verbindungselemente sind denkbar.

Die erste Verbindungseinheit ermöglicht somit vorteilhaft eine Versorgung einer im Schleppkörper untergebrachten Sendeantenne mit elektrischer Energie sowie einen Datenaustausch zwischen Schleppkörper und Zugkabel, insbesondere über Lichtwellenleiter.

Gemäß einer weiteren bevorzugten Ausführungsform der Erfindung ist das am Zugkabel befestigte Verbindungselement als ein im Wesentlichen zylinderförmig gestaltetes Formstück ausgebildet. Dieses Formstück weist einen größeren Durchmesser als das Zugkabel auf.

Ferner ist das am Schleppkörper angeordnete Verbindungselement derart ausgestaltet, dass eine Stirnseite des am Zugkabel angeordneten Formstücks auf dem am Schleppkörper angeordneten Verbindungselement teilweise aufliegt. Bevorzugt ist das Verbindungselement ringförmig als eine Verengung der Gleitführung im Schleppkörper ausgeführt. Das hat den Vorteil, dass beim Durchführen des Zugkabels durch die Gleitführung im Schleppkörper das am Zugkabel angeordnete Formstück an der Verengung in der Gleitführung des Schleppkörpers hängen bleibt und somit die nach außen weisenden Kontaktstifte mit den nach innen weisenden Kontaktöffnungen der beiden Verbindungselemente eine elektrische oder optische Steckverbindung zwischen dem Zugkabel und dem Schleppkörper herstellen.

Eine weitere bevorzugte Ausführungsform der Erfindung sieht eine automatische Erkennung und Zuordnung einer Kontaktbelegung bei mehr als zwei Kontaktstellen der beiden Verbindungselemente vor. Besitzen die beiden Verbindungselemente zum Herstellen einer elektrischen und/oder optischen Verbindung zwischen dem Schleppkörper und dem Zugkabel mehr als zwei Kontaktstellen, weist mindestens eine Kontaktstelle eine Ausleseeinheit auf, um die Kontaktbelegung des Steckverbinders zu erkennen. Anschließend erfolgt eine automatische Zuordnung der jeweiligen Kontaktbelegung des Steckverbinders derart, dass wenn mehr als zwei Kontaktstellen eine Verbindung zwischen Schleppkörper und Zugkabel herstellen, die Verbindung unabhängig von der Ausrichtung des Zugkabels ist.

In einer weiteren bevorzugten Ausführungsform der Erfindung ist in die Gleitführung eine Zwangsführung integriert, welche ein automatisches Ausrichten der Verbindungselemente ermöglicht. Das hat den Vorteil, dass die nach außen weisenden Kontaktstifte automatisch in die nach innen weisenden Kontaktöffnungen eingeführt werden, wenn die beiden Verbindungselemente zusammengeführt werden. Gleiches gilt für die optischen Steckverbindungen vorhandener Lichtwellenleiter, so dass aufgrund der Zwangsführung automatisch eine optische Verbindung hergestellt wird.

Gemäß der Erfindung ist die zweite Verbindungseinheit mit zwei Verbindungselementen zum Herstellen einer mechanischen Verbindung zwischen dem Schleppkörper und dem Zugkabel ausgestaltet. Dabei ist ein Verbindungselement in Form von zwei gegenüber liegenden Zapfen fest an dem Zugkabel angeordnet und ein Verbindungselement als zwei gegenüber liegende Führungsnuten an dem Schleppkörper ausgestaltet.

Somit liegt der mechanische Zugpunkt des Schleppkörpers beim ausgebrachten Schleppsonar nicht an der elektrischen bzw. optischen Verbindungsstelle sondern vorteilhaft an den am Zugkabel angebrachten Zapfen. Durch die Ausgestaltung der sich gegenüber liegenden Führungsnuten an dem Schleppkörper wird durch Aufnahme der beiden Zapfen eine bewegliche Drehschub-Verbindung hergestellt. Wird das Zugkabel, insbesondere mittels eines Führungsrades, nach oben verschwenkt, ist das Zugkabel mit dem Schleppkörper mechanisch verriegelt. Wird das Zugkabel nach unten verschwenkt, ist die Verbindung entriegelt und somit gelöst.

Die Drehschub-Verbindung sorgt vorteilhaft dafür, dass der minimale Krümmungsradius des Zugkabels trotz unterschiedlicher Anstellwinkel des Zugkabels an dem Schleppkörper eingehalten werden kann. Da es sich bei der Drehschub-Verbindung um eine bewegliche Verbindung handelt, lässt sich vorteilhaft der Anstellwinkel des Zugkabels an dem Schleppkörper variieren ohne das Zugkabel an sich zu beanspruchen, wie es beispielsweise bei einer einfachen Verstärkung des Zugkabels zur Einhaltung des minimalen Krümmungsradius' der Fall wäre. Gemäß einer weiteren bevorzugten Ausführungsform der Erfindung weisen die Führungsnuten in dem Schleppkörper einen horizontal verlaufenden Abschnitt auf. Dies ermöglicht vorteilhaft ein automatisches Zusammenführen der beiden Verbindungselemente, indem die Zapfen in den horizontal verlaufenden Abschnitt eingeführt werden.

In einer weiteren bevorzugten Ausführungsform der Erfindung weist die Anschlusseinheit einen konstanten Abstand zwischen den Verbindungseinheiten auf, wobei eine oder beide Verbindungseinheiten ein trichterförmiges Ende auf der einander zugewandten Seite besitzt bzw. besitzen. Da die zweite Verbindungseinheit eine Drehschub-Verbindung darstellt und der Abstand zwischen den Verbindungseinheiten konstant ist, sorgt die Trichterform vorteilhaft dafür, dass das Zugkabel weder gestreckt noch gestaucht wird, wenn sich aufgrund einer variierenden Tauchtiefe des Schleppkörpers der Anstellwinkel des Zugkabels an dem Schleppkörper ändert.

Gemäß einer weiteren bevorzugten Ausführungsform der Erfindung weist die erfindungsgemäße Verbringvorrichtung eine Winde mit mindestens zwei Windentrommeln auf, welche über einen gemeinsamen Motor betreibbar sind. Da der Schleppstrang und das Zugkabel üblicherweise verschiedene Querschnitte aufweisen, besitzen sie ebenso verschiedene minimal zulässige Krümmungsradien. Zur Einhaltung dieser Krümmungsradien sind für den Schleppstrang und das Zugkabel jeweils eine Windentrommel mit angepasstem Trommeldurchmesser notwendig. Weist das Schleppsonar weitere schlauchförmige Sonarabschnitte mit abweichendem minimalem Krümmungsradius auf, ist eine Verwendung von weiteren Windentrommeln denkbar.

Eine Winde mit mehreren Windentrommeln benötigt vorteilhaft nur einen Motorantrieb, einen Schleifring und braucht weniger Platz an Bord des Schleppfahrzeugs als zwei separat betriebene Winden. Bevorzugt ist zwischen den Windentrommeln ein Zwischenraum vorgesehen, welcher derart angepasst ist, um die Anschlusseinheit aufzunehmen. Ferner ist der Motor dieser Winde derart ausgestaltet, um die Geschwindigkeit in Abhängigkeit der abzuwickelnden Windentrommel automatisch anzupassen.

In einer weiteren bevorzugten Ausführungsform der Erfindung weist die Verbringvorrichtung eine Versatzvorrichtung mit Parallelogrammführung zum automatischen Ausbringen und Einholen des Schleppkörpers ins bzw. aus dem Wasser auf, wobei die Versatzvorrichtung vorzugsweise hydraulisch betrieben wird. Die Parallelogrammführung ermöglicht vorteilhaft ein Ausbringen bzw. Einholen des Schleppkörpers ohne dessen relative Lage im Raum zu verändern. Eine Veränderung der Lage des Schleppkörpers könnte nachteilig dazu führen, dass das Zugkabel über seinen minimalen Krümmungsradius hinaus beansprucht werden würde. Der Schleppkörper weist somit die gleiche horizontale Ausrichtung wie das Deck des Schleppfahrzeugs auf.

Zur Umsetzung der Parallelogrammführung weist die Versatzvorrichtung zwei Arme in Form von zwei aneinander gekoppelten Parallelogrammen auf mit einer beweglichen Lagerung am Fußpunkt und am Aufhängepunkt des Schleppkörpers. Eine derartige Versatzvorrichtung ermöglicht vorteilhaft ein vollständiges Eintauchen des Schleppkörpers vor dem Lösen des Schleppkörpers von dieser Versatzvorrichtung, so dass ein Ausbringen des Schleppkörpers auch bei rauer See möglich ist.

Die Erfindung löst die o.g. Aufgabe ferner mit einem Verfahren zum Ausbringen und Einholen eines im Wasser geschleppten Schleppsonars, welches mindestens ein Zugkabel, einen Schleppkörper und einen Schleppstrang aufweist. Das erfindungsgemäße Verfahren ermöglicht vorteilhaft mittels einer Anschlusseinheit ein automatisches An- und Abkoppeln des Schleppkörpers an bzw. vom Zugkabel. Dazu weist die Anschlusseinheit zwei voneinander beabstandete Verbindungseinheiten auf, welche zum Herstellen von jeweils einer lösbaren Verbindung zwischen dem Schleppkörper und dem Zugkabel, insbesondere einer elektrischen und/oder optischen Verbindung und einer mechanischen Verbindung, verwendet werden.

Vorteilhafterweise braucht sich bei dem erfindungsgemäßen Verfahren kein Bediener während des normalen Ausbring- bzw. Einholvorgangs auf dem offenen Deck des Schleppfahrzeugs aufzuhalten. Dadurch ist das erfindungsgemäße Verfahren einfach und für einen Bediener gefahrlos durchführbar.

Gemäß einer bevorzugten Ausführungsform der Erfindung wird das Ausbringen und Einholen des Schleppsonars mittels eines Videosystems überwacht. Das Videosystem ist bevorzugt in Windennähe installiert und zeigt den aktuellen Status des ausgebrachten Schleppsonars an.

In einer weiteren bevorzugten Ausführungsform der Erfindung wird jeder Verfahrensschritt zum Ausbringen und Einholen des Schleppsonars an einer Bedienkonsole, insbesondere einer portablen Bedienkonsole, angezeigt.

Die Verbringvorrichtung verfügt bevorzugt über eine Vielzahl von Sensoren zum Überwachen des Ausbringvorgangs bzw. des Einholvorgangs des Schleppsonars. Über die Bedienkonsole kann ein Bediener den Vorgang überwachen und wenn notwendig jederzeit unterbrechen.

Weitere vorteilhafte Ausführungsformen der Erfindung ergeben sich aus den Unteransprüchen sowie aus den anhand der anliegenden Zeichnung näher erläuterten Ausführungsbeispielen. In der Zeichnung zeigen:
- Fig. 1: eine schematische Darstellung eines Schleppfahrzeugs mit nachgeschleppten Schleppsonar,
- Fig. 2: eine schematische Darstellung einer an Deck eines Schleppfahrzeugs angeordneten Verbringvorrichtung,
- Fig. 3: eine schematische Darstellung einer Windeneinrichtung,
- Fig. 4: eine schematische Schnittdarstellung einer Seitenansicht des Schleppkörpers,
- Fig. 5: eine schematische Schnittdarstellung der Seitenansicht des Schleppkörpers mit eingeführter Anschlusseinheit und
- Fig. 6: eine schematische Schnittdarstellung der Seitenansicht des Schleppkörpers mit verbundener Anschlusseinheit.

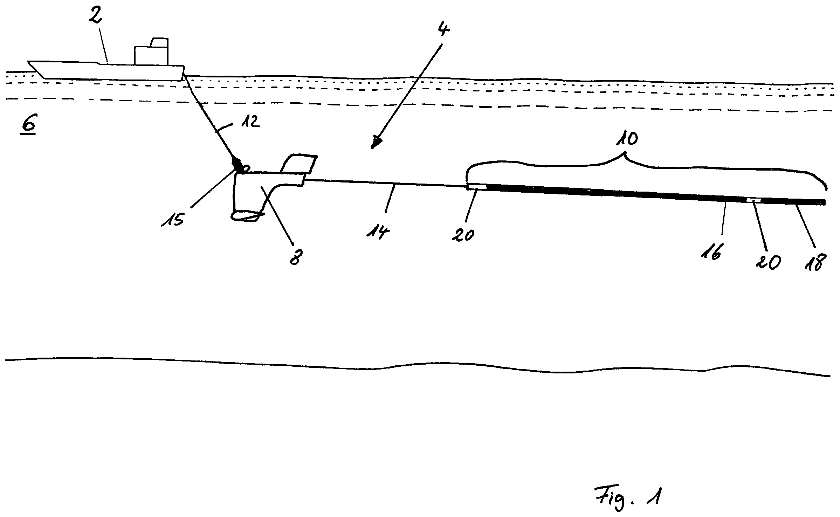

Fig. 1 zeigt in einer schematischen Darstellung ein Überwasserschiff als Schleppfahrzeug 2, welches ein Schleppsonar 4 durch das umgebende Wasser 6 zieht, wobei das Schleppsonar 4 in bekannter Weise einen Schleppkörper 8 als akustischen Sendeteil und einen Schleppstrang 10 als akustischen Empfangsteil aufweist. Der Schleppkörper 8 ist über ein erstes Zugkabel 12 mit dem Schleppfahrzeug 2 verbunden. Ein zweites Zugkabel 14 verbindet den Schleppkörper 8 mit dem Schleppstrang 10, in dem in einer schlauchförmigen Hülle eine Empfangsantenne 16 mit einer Vielzahl von hintereinander angeordneten Hydrophonen angeordnet ist. Zwischen dem ersten Zugkabel 12 und dem zweiten Zugkabel 14 befindet sich eine in Fig. 1 jedoch nur teilweise dargestellte erfindungsgemäße Anschlusseinheit 15, um die Zugkabel 12, 14 miteinander und mit dem Schleppkörper 8 zu verbinden. Um die hydrodynamischen Eigenschaften des Schleppsonars 4 zu verbessern, können die Zugkabel 12, 14 mit einer stromlinienförmigen Verkleidung ausgestaltet sein. Ferner weist der Schleppstrang 10 üblicherweise ein Endstück 18 zur Streckung der Empfangsantenne 16 auf, indem durch das Endstück 18 eine der Schlepprichtung entgegengesetzte Zugkraft erzeugt wird. Schließlich sind ein oder mehrere Dämpfungsmodule 20 zur akustischen Entkopplung der Empfangsantenne 16 vom Zugkabel 14 und vom dem Endstück 18 an dem Schleppstrang 10 angeordnet.

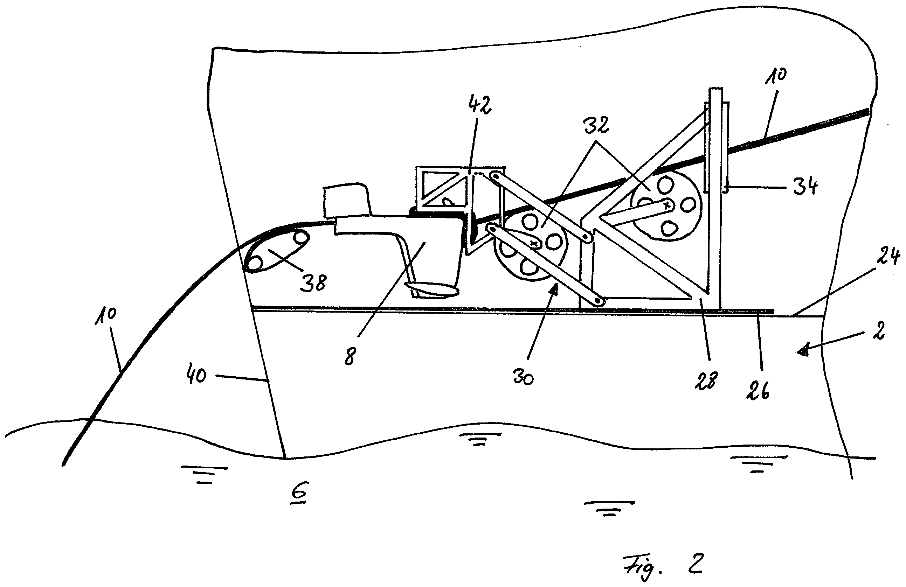

Zum Ausbringen und Einholen des Schleppsonars 4 vom Schleppfahrzeug 2 aus ist an Bord des Schleppfahrzeugs 2 eine Verbringvorrichtung vorhanden. Fig. 2 zeigt ausschnittsweise eine erfindungsgemäße Verbringvorrichtung zum automatischen Ausbringen und Einholen eines Schleppsonars 4 während eines Ausbring- oder Einholvorgangs. Dazu ist an Deck 24 des Schleppfahrzeugs 2 ein auf Schienen 26 gelagerter Schlitten 28 angeordnet, an dem eine Versatzvorrichtung 30 beweglich befestigt ist. Ferner weisen der Schlitten 28 und die Versatzvorrichtung 30 jeweils ein Führungsrad 32 auf, welches zum Führen des Schleppstrangs 10 bzw. der Zugkabel 12, 14 verschieden hoch aufgestellt werden kann. An der Rückseite des Schlittens 28 sind zwei drehbar gelagerte Rollen 34 mit vertikalen Drehachsen angeordnet, zwischen denen der Schleppstrang 10 bzw. die Zugkabel 12, 14 geführt werden.

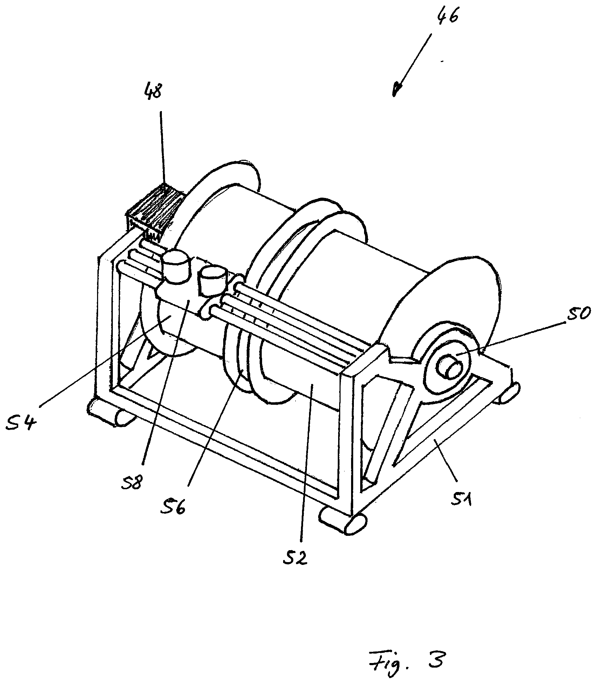

Der Schleppstrang 10 gemäß Fig. 1 wird von einer hier nicht dargestellten, jedoch in Fig. 3 näher erläuterten Winde durch die Rollen 34 und über die Führungsräder 32 automatisch durch den Schleppkörper 8 geführt.

Hinter dem Schleppkörper 8 ist optional ein Gummitransportband 38 angeordnet, um den Schleppstrang 10 von dem Schleppkörper 8 aus über die Heckwand 40 des Schleppfahrzeugs 2 in das umgebende Wasser 6 abzulassen, wobei durch die gewölbte Form des Gummitransportbandes 38 ein minimaler Krümmungsradius des Schleppstrangs 10 eingehalten wird. Zur Unterstützung des Ausbring- bzw. Einholvorgangs ist das Gummitransportband 38 vorzugsweise mit einem elektrischen Antrieb versehen. Das Gummitransportband 38 dient als Führung für den Schleppstrang und lässt sich nach dem Ausbringen des kompletten Schleppstrangs 10 seitwärts schwenken.

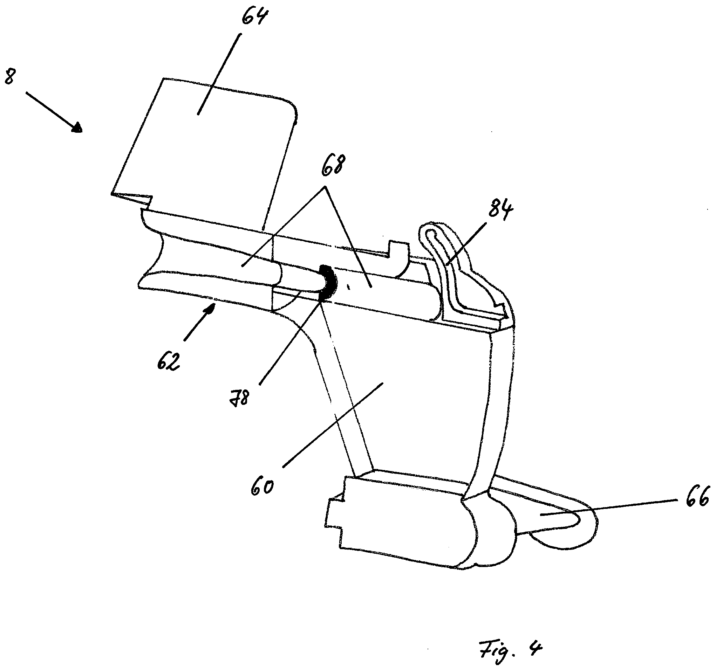

Der Schleppstrang 10 sowie das zweite Zugkabel 14 werden beim Ausbringen des Schleppsonars 4 solange durch den Schleppkörper 8 geführt, bis die Anschlusseinheit 15 in den Schleppkörper 8 eingeführt ist und dann automatisch eine elektrische und/oder optische Verbindung zwischen dem Schleppkörper 8 und dem Zugkabeln 12, 14 herstellt. Zum Herstellen einer mechanischen Verbindung zwischen den Zugkabeln 12, 14 und dem Schleppkörper 8 wird mindestens ein Führungsrad 32 derart vertikal nach oben verschwenkt, dass das Zugkabel 12 von dem Führungsrad 32 angehoben wird und somit seinen Anstellwinkel zum Schleppkörper 8 verändert. Das automatische Anbinden des Schleppkörpers 8 an den Zugkabeln 12, 14 mittels der Anschlusseinheit 15 wird anhand von den Fig. 4 bis 6 weiter unten detailliert erläutert.

Nach dem automatischen Anbinden des Schleppkörpers 8 an den Zugkabeln 12, 14 wird der Schlitten 28 auf den Schienen 26 zur Heckwand 40 verschoben, so dass der Schleppkörper 8 über die Heckwand 40 des Schleppfahrzeugs 2 hinausragt und die Versatzvorrichtung 30 den an einem Sattel 42 befestigten Schleppkörper 8 ins Wasser 6 bringen kann.

Die Versatzvorrichtung 30 weist zwei Arme in Form von aneinandergekoppelten Parallelogrammen auf, um den Schleppkörper 8 mit dem Sattel 42 an dem Schlitten 28 zu befestigen. Die Parallelogrammführung der Versatzvorrichtung 30 ermöglicht vorteilhaft ein Ausbringen bzw. Einholen des Schleppkörpers 8, ohne die horizontale Ausrichtung des Schleppkörpers 8 zum Schleppfahrzeug 2 zu verändern. Dadurch bleibt die Einhaltung des minimalen Krümmungsradius' des Zugkabels 14 beim Ausbringen bzw. Einholen des Schleppkörpers 8 sichergestellt.

Die erfindungsgemäße Verbringvorrichtung umfasst ferner eine Winde, welche in Fig. 3 detailliert darstellt ist. Fig. 3 zeigt nämlich eine erfindungsgemäße motorbetriebene Zwillingswinde 46 an deren einen Seite ein elektrisch betriebener Motor 48 angeordnet ist und an deren anderen Seite ein Schleifring 50 angeordnet ist. Bevorzugt handelt es sich bei dem Schleifring 50 um eine Kombination aus elektrischen und optischen Schleifringen, um einen kontinuierlichen Daten- und Leistungsaustausch zwischen dem Schleppfahrzeug 2 und dem auf der Winde 46 befindlichen Zugkabel 12 auch während des Betriebs der Winde 46 zu ermöglichen.

Die Winde 46 ist an einen stationären Bezugsrahmen 51 drehbar gelagert, wobei der Bezugsrahmen 51 an Deck 24 des Schleppfahrzeugs 2 befestigt ist.

Die Zwillingswinde 46 ist unterteilt in eine erste Windentrommel 52 und eine zweite Windentrommel 54, wobei zwischen der ersten Windentrommel 52 und der zweiten Windentrommel 54 ein vorbestimmter Zwischenraum 56 vorgesehen ist.

Um Beschädigungen im Innern des Schleppsonars 4 zu vermeiden, dürfen die Zugkabel 12, 14 sowie der Schleppstrang 10 nur mit relativ großem Krümmungsradius aufgetrommelt werden. Da der Schleppstrang 10 und die Zugkabel 12, 14 auch verschiedene minimale Krümmungsradien aufgrund von verschiedenen Querschnitten aufweisen können, können die Windentrommeln 52, 54 verschiedene Trommeldurchmesser aufweisen.

Bevorzugt wird auf der erfindungsgemäßen Winde 46 auf der ersten Windentrommel 52 das erste Zugkabel 12 aufgetrommelt und auf der zweiten Windentrommel 54 das zweite Zugkabel 14 und der Schleppstrang 10.

Der Zwischenraum 56 zwischen den Windentrommeln 52, 54 wird zur Aufnahme der erfindungsgemäßen Anschlusseinheit 15 genutzt, da die Anschlusseinheit 15 aufgrund ihrer Konstruktion einen wesentlich größeren Krümmungsradius als die Zugkabel 12, 14 und der Schleppstrang 10 aufweist und somit nicht auf einer der beiden Windentrommeln 52, 54 gelagert werden kann.

Zum Ausbringen des Schleppsonars 4 wird zunächst der Schleppstrang 10 über einen Führungsschlitten 58 mit zwei Umlenkrollen durch den Schlitten 28 in den Schleppkörper 8 geführt. Anschließend folgt das zweite Zugkabel 14, die Anschlusseinheit 15 sowie das erste Zugkabel 12. Je nachdem welche Windentrommel 52; 54 gerade bedient wird, folgt der Führungsschlitten 58 dem ab- bzw. aufzuwickelnden Zugkabel 12, 14, der Anschlusseinheit 15 oder dem Schleppstrang 10.

Durch Drehen der Zwillingswinde 46 erfolgt erfindungsgemäß ein automatisches Ausbringen bzw. Einholen des Schleppsonars 4. Der Motorantrieb 48 passt dabei die Drehgeschwindigkeit der Winde 46 automatisch an, so dass auch Kabel mit verschiedenen Durchmessern mit konstanter Geschwindigkeit ab- bzw. aufgewickelt werden können.

Zum automatischen Ausbringen bzw. Einholen des Schleppsonars 4 weist der Schleppkörper 8 eine erfindungsgemäße Ausgestaltung auf, die anhand von Fig. 4, 5 und 6 näher erläutert wird.

Fig. 4 zeigt eine schematische Schnittdarstellung des Schleppkörpers 8 zur Beschreibung des allgemeinen Aufbaus des Schleppkörpers 8. Dieser weist in bekannter Weise einen hohlen Rumpf 60 mit einer formsteifen Hülle auf, welcher bevorzugt strömungsgünstig geformt ist. In dem Rumpf 60 ist eine hier nicht weiter dargestellte Sendeantenne mit einer Rundumcharakteristik angeordnet.

Der tubusförmige Heckteil 62 des Schleppkörpers 8 weist zwei die Stabilisatoren bildende Flügel 64 auf, welche radial abstehen. Dadurch erhält der Schleppkörper 8 beim Schleppen eine sehr stabile Schwimmlage sowie eine gute Stabilisierung der rundumsendenden Sendeantenne in Vertikalrichtung.

An dem unteren Ende des Rumpfes 60 sind auf beiden Seiten Depressoren 66 angeordnet. Sie dienen zur variablen Einstellung der Schlepptiefe durch einen dynamischen Abtrieb. So kann eine annähernd konstante Tauchtiefe des Schleppkörpers 8 und damit des Schleppstrangs 10 auch bei unterschiedlicher Schleppgeschwindigkeit eingehalten werden, wobei die Tauchtiefe des Schleppkörpers 8 mittels der Depressoren 66 variiert werden kann.

Im Inneren des Schleppkörpers 8 ist zum Durchführen des Schleppstrangs 10 sowie des Zugkabels 14 eine Gleitführung 68 eingebracht, dessen heckseitige Öffnung konusförmig erweitert ist, um beim Ausbringen bzw. Einholen des Schleppstrangs 10 ein Abknicken des Schleppstrangs 10 zu vermeiden.

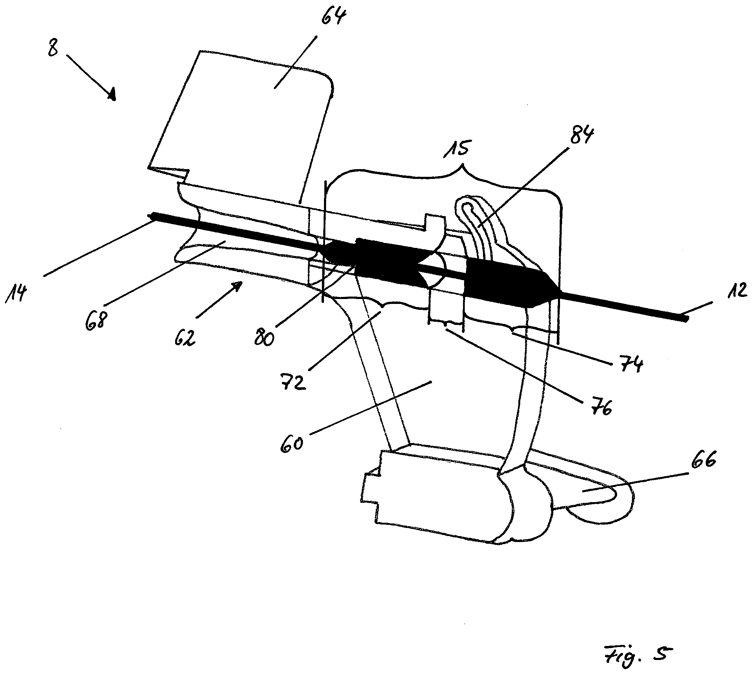

Fig. 5 zeigt eine schematische Schnittdarstellung des Schleppkörpers 8 mit eingeführter Anschlusseinheit 15. Die Anschlusseinheit 15 weist eine erste Verbindungseinheit 72 und eine zweite Verbindungseinheit 74 auf, wobei die beiden Verbindungseinheiten 72, 74 mit einem konstanten Abstand 76 zueinander als Bindeglied zwischen dem ersten Zugkabel 12 und dem zweiten Zugkabel 14 angeordnet sind.

Die erste Verbindungseinheit 72 ermöglicht eine automatische elektrische und/oder optische Verbindung zwischen dem Schleppkörper 8 und den Zugkabeln 12, 14 und weist dazu zwei Verbindungselemente auf, welche bevorzugt als Steckverbinder ausgestaltet sind.

Zum Herstellen einer derartigen Verbindung weist die Gleitführung 68 innerhalb des Schleppkörpers 8, insbesondere im Wesentlichen mittig der tubusförmigen Gleitführung 68, eine Querschnittsverkleinerung auf, dessen Ringfläche 78 gemäß Fig. 4 ein Verbindungselement der ersten Verbindungseinheit 72 bildet.

Die erste Verbindungseinheit 72 weist ferner ein im Wesentlichen kreiszylinderförmig ausgebildetes Formstück auf, welches fest am Zugkabel 14 befestigt ist. Dabei ist das Formstück annähernd dem Durchmesser der Gleitführung 68 angepasst. D.h., am Zugkabel 14 ist zunächst ein kreiszylinderförmiger Abschnitt des Formstücks angeordnet, dessen Durchmesser der Querschnittsverkleinerung der Gleitführung 68 entspricht, so dass dieser Abschnitt des Formstücks beim Ausbringen des Schleppsonars 4 durch die Querschnittsverkleinerung geführt wird. Im weiteren Verlauf weist das Formstück einen größeren Querschnitt auf, so dass an dem Formstück ebenfalls eine Ringfläche 80 entsteht, die das zweite Verbindungselement der ersten Verbindungseinheit 72 bildet.

Beim Einführen der Anschlusseinheit 15 in den Schleppkörper 8 werden automatisch die beiden Ringflächen 78, 80 der ersten Verbindungseinheit 72 zusammengeführt. Bevorzugt sind die Ringflächen 78, 80 mit jeweils wenigstens einer Kontaktstelle ausgestaltet. Die Kontaktstellen können als Stecker oder Buchse ausgeführt sein zum Herstellen einer elektrischen Verbindung zwischen dem Zugkabel 14 und dem Schleppkörper 8 oder eine geeignete Ausführungsform für die Verbindung von Lichtwellenleiter aufweisen, um eine optische Anbindung des Schleppkörpers 8 an dem Zugkabel 14 zur Übertragung von optischen Signalen zu ermöglichen.

Für den Fall, dass die erste Verbindungseinheit 72 mehr als zwei Kontaktstellen aufweist, verfügt mindestens eine Kontaktstelle beispielsweise über eine Ausleseeinheit, um die Kontaktbelegung zu erkennen. Dadurch kann vorteilhaft eine automatische Zuordnung der Kontaktbelegung erfolgen, so dass die Steckverbindung unabhängig von der Position der Kontaktstelle ist, welche von einer Rotationsbewegung des Zugkabels 14 bzw. des am Zugkabel 14 befestigten Formstücks abhängig ist.

Ferner ist es denkbar im Inneren der Gleitführung 68 eine Zwangsführung zu integrieren, welche ein automatisches Ausrichten der Verbindungselemente 78, 80 zueinander ermöglicht, so dass die nach außen weisenden Kontaktstifte auch mit den nach innen weisenden Kontaktöffnungen zusammentreffen. Die Zwangsführung sorgt beim Einführen der Anschlusseinheit 15 in den Schleppkörper 8 für eine entsprechende Drehbewegung des Formstücks der ersten Verbindungseinheit 72.

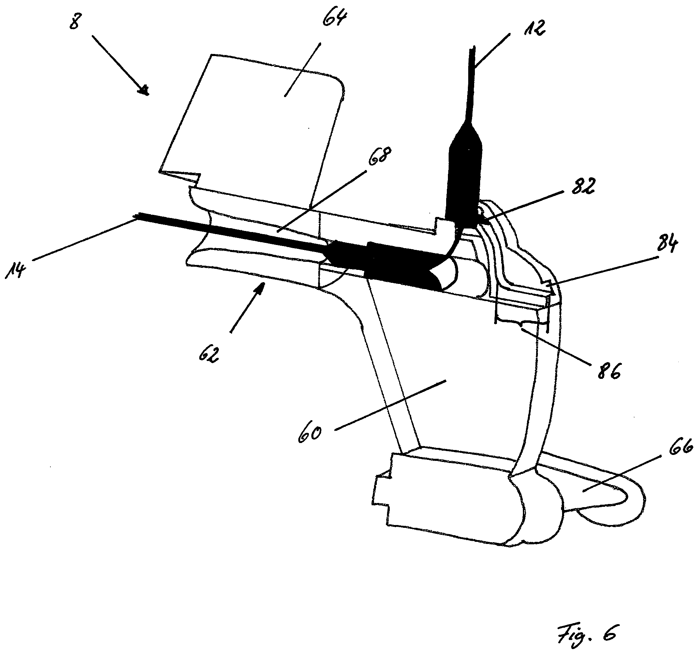

Wie in Fig. 5 dargestellt, weist die Anschlusseinheit 15 in einem konstanten Abstand 76 zur ersten Verbindungseinheit 72 eine zweite Verbindungseinheit 74 auf. Die zweite Verbindungseinheit 74 weist ebenfalls zwei Verbindungselemente auf und dient zur mechanischen Verbindung gemäß Fig. 6 des Zugkabels 12 mit dem Schleppkörper 8. Dazu ist auch hier ein im Wesentlichen kreiszylinderförmiges Formstück fest am Zugkabel 12 befestigt. Ferner sind beidseitig gegenüberliegend an dem Formstück als ein erstes Verbindungselement zwei Zapfen 82 angeordnet.

Zum Herstellen der mechanischen Verbindung werden beim Einführen der Anschlusseinheit 15 in den Schleppkörper 8 die Zapfen 82 der zweiten Verbindungseinheit 74 in beidseitig am Schleppkörper 8 vorgesehene Führungsnuten 84 eingebracht, wobei die Führungsnuten 84 das zweite Verbindungselement der zweiten Verbindungseinheit 74 darstellen.

Nachdem die Zapfen 82 durch einen horizontal verlaufenden Abschnitt 86 der beidseitig am Schleppkörper verlaufenden Führungsnuten 84 geführt wurden, kann eine Vertikalbewegung des Zugkabels 12 nach oben erfolgen. Dadurch wird vorteilhaft eine bewegliche Drehschub-Verbindung zwischen dem Zugkabel 12 und dem Schleppkörper 8 hergestellt. Bevorzugt erfolgt die Vertikalbewegung des Zugkabels 12 durch ein Aufwärtsschwenken des Führungsrades 32 der Verbringvorrichtung.

Der Verlauf der Führungsnuten 84 ist zusammen mit dem konstanten Abstand 76 zwischen den Verbindungseinheiten 72, 74 und einem trichterförmigen Ende des Formstücks der ersten Verbindungseinheit 72 derart ausgestaltet, dass unabhängig vom Anstellwinkel des Zugkabels 12 an dem Schleppkörper 8 der minimale Krümmungsradius des Zugkabels 12 eingehalten wird.

Der mechanische Zugpunkt des Schleppkörpers 8 beim ausgebrachten Schleppsonar 4 liegt somit nicht an der elektrischen bzw. optischen Verbindungsstelle, sondern an den am Zugkabel 12 angebrachten Zapfen 82. Durch die erfindungsgemäße Entkopplung der elektrischen/optischen Verbindung von der mechanischen Verbindung lässt sich vorteilhaft die Tauchtiefe des Schleppkörpers 8 variieren. Verschiedene Tauchtiefen des Schleppkörpers 8 erzeugen verschiedene Anstellwinkel des Zugkabels 12 an dem Schleppkörper 8. Über die Drehschub-Verbindung kann der Anstellwinkel vorteilhaft variiert werden, wobei der minimale Krümmungsradius des Zugkabels 12 stets eingehalten wird.

Das Lösen der Drehschub-Verbindung erfolgt in umgekehrter Weise indem das Zugkabel 12 mittels des Führungsrades 32 beim Einholen des Schleppsonars 4 abwärts bewegt wird, so dass beide Zugkabel 12, 14 in einer Flucht liegen. Dadurch ist die mechanische Verbindung der zweiten Verbindungseinheit 74 zum Schleppkörper 8 gelöst und die Anschlusseinheit 15 kann durch Aufwickeln des Zugkabels 12 auf die Winde 46 aus dem Schleppkörper 8 gezogen werden.

Die erfindungsgemäße Vorrichtung mit einer vorstehend beschriebenen Anschlusseinheit 15 hat den Vorteil, dass kein manuelles Verbinden bzw. Lösen des Schleppkörpers 8 mit/von dem Zugkabel 12/14 vorgesehen ist. Der Ausbring- bzw. Einholvorgang erfolgt vollautomatisch und ist daher einfach und für einen Bediener gefahrlos durchführbar.

Bevorzugt wird der Ausbring- oder Einholvorgang mittels eines Videosystems überwacht. Dazu sind in der Nähe der Verbringvorrichtung Kameras installiert, um dem aktuellen Status des ausgebrachten Schleppsonars 4 anzuzeigen.

Ferner ist die Verwendung einer portablen Bedienkonsole beim Ausbringen und Einholen des Schleppsonars 4 denkbar. Die Signale der Kameras und/oder verschieden angebrachter Sensoren zur Überwachung des Ausbring- bzw. Einholvorgangs werden von der Bedienkonsole erfasst, so dass jeder Verfahrensschritt angezeigt werden kann. Über eine derartige Bedienkonsole kann ein Bediener den Vorgang überwachen und wenn notwenig den Vorgang jederzeit unterbrechen.

Sämtliche in der vorstehenden Beschreibung sowie in den Ansprüchen genannten Merkmale sind erfindungsgemäß sowohl einzeln als auch in beliebiger Kombination miteinander einsetzbar. Die Offenbarung der Erfindung ist daher nicht auf die beschriebenen bzw. beanspruchten Merkmalskombinationen beschränkt. Vielmehr sind alle Kombinationen von Einzelmerkmalen als offenbart zu betrachten.

## Patentansprüche

1. Verbringvorrichtung zum Ausbringen und Einholen eines im Wasser (6) geschleppten Schleppsonars (4), welches mindestens ein Zugkabel (12, 14), einen Schleppkörper (8), einen Schleppstrang (10) und eine Anschlusseinheit (15) zum automatischen Ankoppeln und Abkoppeln des Schleppkörpers (8) am/vom Zugkabel (12/ 14) aufweist,
wobei
die Anschlusseinheit (15) zwei voneinander beabstandete Verbindungseinheiten (72, 74) aufweist, wobei im Verbindungsfall die zwei voneinander beabstandeten Verbindungseinheiten (72, 74) jeweils eine lösbare Verbindung zwischen dem Schleppkörper (8) und dem Zugkabel (12/ 14) oder den Zugkabeln (12, 14) herstellen, sodass eine elektrische und/oder optische Verbindung zwischen dem Schleppkörper (8) und den Zugkabeln (12,14) sowie eine mechanische Verbindung zwischen dem Schleppkörper (8) und dem Zugkabel (12/ 14) verwendbar sind **gekennzeichnet durch** eine Ausgestaltung einer zweiten Verbindungseinheit (74) der zwei voneinander beabstandeten Verbindungseinheiten mit zwei Verbindungselementen zum Herstellen der mechanischen Verbindung zwischen dem Schleppkörper (8) und dem Zugkabel (12/14), wobei ein Verbindungselement als zwei gegenüberliegende Zapfen (82) fest am Zugkabel (12/14) angeordnet ist und ein Verbindungselement als Führungsnuten (84) an dem Schleppkörper (8) angeordnet ist, wobei durch die Ausgestaltung der sich gegenüberliegenden Führungsnuten an dem Schleppkörper durch Aufnahme der beiden Zapfen eine bewegliche Drehschub-Verbindung herstellbar ist.

2. Verbringvorrichtung nach Anspruch 1,
**gekennzeichnet durch**
eine Gleitführung (68) im Schleppkörper (8), um den Schleppstrang (10) und das Zugkabel (14) durch den Schleppkörper (8) zu führen.

3. Verbringvorrichtung nach Anspruch 2,
**gekennzeichnet durch**
eine tubusförmige Ausgestaltung der Gleitführung (68) mit zwei axialen Öffnungen, wobei die heckseitige Öffnung der Gleitführung (68) konusförmig erweitert ist.

4. Verbringvorrichtung nach einem der vorhergehenden Ansprüche,
**gekennzeichnet durch**
eine Ausgestaltung der ersten Verbindungseinheit (72) als ein Steckverbinder mit zwei Verbindungselementen (78, 80) zum Herstellen der elektrischen und/oder optischen Verbindung zwischen dem Schleppkörper (8) und dem Zugkabel (12/ 14), wobei ein Verbindungselement (78) fest am Zugkabel (12/ 14) angeordnet ist und ein Verbindungselement (80) im Schleppkörper (8) angeordnet ist.

5. Verbringvorrichtung nach Anspruch 4,
**gekennzeichnet durch**
eine Ausgestaltung des am Zugkabel (12/ 14) befestigten Verbindungselements (78) mit einem im Wesentlichen zylindrischen Formstück, welches einen größeren Durchmesser als das Zugkabel (12/ 14) aufweist und
eine Ausgestaltung des am Schleppkörper (8) angeordneten Verbindungselements (80) derart, dass eine Stirnseite des Formstücks des am Zugkabel (12/ 14) befestigten Verbindungselements (78) auf dem am Schleppkörper (8) angeordneten Verbindungselement (80) teilweise aufliegt.

6. Verbringvorrichtung nach Anspruch 4,
**gekennzeichnet durch**
eine automatische Erkennung und Zuordnung einer Kontaktbelegung bei mehr als zwei Kontaktstellen der beiden Verbindungselemente (78, 80) zum Herstellen einer elektrischen und/oder optischen Verbindung zwischen dem Schleppkörper (8) und dem Zugkabel (12/ 14).

7. Verbringvorrichtung nach einem der Ansprüche 4 bis 6,
**gekennzeichnet durch**
eine Zwangsführung, welche in die Gleitführung (68) integriert ist, um ein automatisches Ausrichten der Verbindungselemente (78, 80) zu ermöglichen.

8. Verbringvorrichtung nach einem der Ansprüche 1 bis 3,
**gekennzeichnet durch**
einen horizontal verlaufenden Abschnitt (86) der Führungsnuten (84) an dem Schleppkörper (8).

9. Verbringvorrichtung nach einem der vorhergehenden Ansprüche,
**gekennzeichnet durch**
eine Ausgestaltung der Anschlusseinheit (15) mit einem konstanten Abstand (76) zwischen den Verbindungseinheiten (72, 74), wobei eine oder beide Verbindungseinheiten (72, 74) ein trichterförmiges Ende auf der einander zugewandten Seite aufweisen.

10. Verbringvorrichtung nach einem der vorhergehenden Ansprüche,
**gekennzeichnet durch**
eine Winde (46) mit mindestens zwei Windentrommeln (52, 54), welche über einen gemeinsamen Motor (48) betreibbar sind.

11. Verbringvorrichtung nach einem der vorhergehenden Ansprüche,
**gekennzeichnet durch**
eine Versatzvorrichtung (30) mit Parallelogrammführung zum Aussetzen und Einholen des Schleppkörpers (8) ins oder aus dem Wasser (6).

12. Verfahren zum Ausbringen und Einholen eines im Wasser (6) geschleppten Schleppsonars (4), welches mindestens ein Zugkabel (12/ 14), einen Schleppkörper (8) und einen Schleppstrang (10) aufweist, wobei mittels einer Anschlusseinheit (15) der Schleppkörper (8) automatisch am Zugkabel (12/ 14) angekoppelt oder vom Zugkabel (12/ 14) abgekoppelt wird,
**dadurch gekennzeichnet, dass**
die Anschlusseinheit (15) zwei voneinander beabstandete Verbindungseinheiten (72, 74) aufweist, welche zum Herstellen von jeweils einer lösbaren Verbindung zwischen dem Schleppkörper (8) und dem Zugkabel (12/ 14) verwendet werden, sodass eine elektrische und/oder optische Verbindung zwischen dem Schleppkörper (8) und dem Zugkabel (12/ 14) sowie eine mechanische Verbindung zwischen dem Schleppkörper (8) und dem Zugkabel (12/ 14) verwendet werden,
**gekennzeichnet durch** eine Ausgestaltung einer zweiten Verbindungseinheit (74) der zwei voneinander beabstandeten Verbindungseinheiten mit zwei Verbindungselementen wobei die mechanischen Verbindung zwischen dem Schleppkörper (8) und dem Zugkabel (12/14) hergestellt wird, wobei ein Verbindungselement als zwei gegenüberliegende Zapfen (82) fest am Zugkabel (12/14) angeordnet ist und ein Verbindungselement als Führungsnuten (84) an dem Schleppkörper (8) angeordnet ist, wobei durch die Ausgestaltung der sich gegenüberliegenden Führungsnuten an dem Schleppkörper durch Aufnahme der beiden Zapfen eine bewegliche Drehschub-Verbindung hergestellt wird.

13. Verfahren nach Anspruch 12,
**dadurch gekennzeichnet, dass**
das Ausbringen und Einholen des Schleppsonars (4) mittels eines Videosystems überwacht wird.

14. Verfahren nach Anspruch 12 oder 13,
**dadurch gekennzeichnet, dass**
jeder Verfahrensschritt zum Ausbringen und Einholen des Schleppsonars (4) an einer Bedienkonsole angezeigt wird.

## Claims

1. Deployment apparatus for paying out and retrieving a towed sonar (4) which is towed in water (6) and has at least one traction cable (12, 14), a towed body (8), a tow line (10) and a connection unit (15) for automatically coupling and decoupling the towed body (8) to/from the traction cable (12/14),
wherein
the connection unit (15) has two connecting units (72, 74) which are at a distance from one another, wherein, in the event of connection, the two connecting units (72, 74) which are at a distance from one another each establish a releasable connection between the towed body (8) and the traction cable (12/14) or the traction cables (12, 14), so that an electrical and/or optical connection between the towed body (8) and the traction cables (12, 14) and also a mechanical connection between the towed body (8) and the traction cable (12/14) can be used, **characterized by** a configuration of a second connecting unit (74) of the two connecting units which are at a distance from one another with two connecting elements for establishing the mechanical connection between the towed body (8) and the traction cable (12/14), wherein a connecting element in the form of two opposite journals (82) is fixedly arranged on the traction cable (12/14) and a connecting element in the form of guide grooves (84) is arranged on the towed body (8), wherein, owing to the configuration of the opposite guide grooves on the towed body, a movable rotary thrust connection can be established by receiving the two journals.

2. Deployment apparatus according to Claim 1, **characterized by**
a sliding guide (68) in the towed body (8) in order to guide the tow line (10) and the traction cable (14) through the towed body (8).

3. Deployment apparatus according to Claim 2, **characterized by**
a tubular configuration of the sliding guide (68) with two axial openings, wherein the rear-side opening of the sliding guide (68) is widened in a conical manner.

4. Deployment apparatus according to one of the preceding claims,
**characterized by**
a configuration of the first connecting unit (72) in the form of a plug-in connector with two connecting elements (78, 80) for establishing the electrical and/or optical connection between the towed body (8) and the traction cable (12/14), wherein one connecting element (78) is fixedly arranged on the traction cable (12/14) and one connecting element (80) is arranged in the towed body (8) .

5. Deployment apparatus according to Claim 4,
**characterized by**
a configuration of the connecting element (78), which is fastened to the traction cable (12/14), with a substantially cylindrical shaped piece which has a larger diameter than the traction cable (12/14), and
a configuration of the connecting element (80), which is arranged on the towed body (8), in such a way that an end side of the shaped piece of the connecting element (78) which is fastened to the traction cable (12/14) partially lies on the connecting element (80) which is arranged on the towed body (8).

6. Deployment apparatus according to Claim 4,
**characterized by**
automatic identification and allocation of a contact assignment when there are more than two contact points of the two connecting elements (78, 80) for establishing an electrical and/or optical connection between the towed body (8) and the traction cable (12/14).

7. Deployment apparatus according to one of Claims 4 to 6,
**characterized by**
a positive guide, which is integrated in the sliding guide (68), in order to render possible automatic orientation of the connecting elements (78, 80).

8. Deployment apparatus according to one of Claims 1 to 3,
**characterized by**
a horizontally running section (86) of the guide grooves (84) on the towed body (8).

9. Deployment apparatus according to one of the preceding claims,
**characterized by**
a configuration of the connection unit (15) with a constant distance (76) between the connecting units (72, 74), wherein one or both connecting units (72, 74) has/have a funnel-like end on the mutually facing side.

10. Deployment apparatus according to one of the preceding claims,
**characterized by**
a winch (46) with at least two winch drums (52, 54) which can be operated by means of a common motor (48).

11. Deployment apparatus according to one of the preceding claims,
**characterized by**
a stowing apparatus (30) with a parallelogram guide for releasing and retrieving the towed body (8) into or from the water (6).

12. Method for paying out and retrieving a towed sonar (4) which is towed in water (6) and has at least one traction cable (12/14), a towed body (8) and a tow line (10), wherein the towed body (8) is automatically coupled to the traction cable (12/14) or decoupled from the traction cable (12/14) by means of a connection unit (15),
**characterized in that**
the connection unit (15) has two connecting units (72, 74) which are at a distance from one another and which are used for establishing in each case a releasable connection between the towed body (8) and the traction cable (12/14), so that an electrical and/or optical connection between the towed body (8) and the traction cable (12/14) and also a mechanical connection between the towed body (8) and the traction cable (12/14) are used,
**characterized by** a configuration of a second connecting unit (74) of the two connecting units which are at a distance from one another with two connecting elements, wherein the mechanical connection between the towed body (8) and the traction cable (12/14) is established, wherein a connecting element in the form of two opposite journals (82) is fixedly arranged on the traction cable (12/14) and a connecting element in the form of guide grooves (84) is arranged on the towed body (8), wherein, owing to the configuration of the opposite guide grooves on the towed body, a movable rotary thrust connection can be established by receiving the two journals.

13. Method according to Claim 12,
**characterized in that**
the paying out and retrieval of the towed sonar (4) are monitored by means of a video system.

14. Method according to Claim 12 or 13,
**characterized in that**
each method step for paying out and retrieving the towed sonar (4) is displayed on an operator control console.

## Revendications

1. Dispositif de transfert destiné à mettre à la mer et récupérer un sonar remorqué (4), remorqué dans l'eau (6), qui comporte au moins un câble de traction (12, 14), un corps de remorquage (8), une ligne de remorquage (10) et une unité de raccordement (15) destinée à accoupler le corps de remorquage (8) au câble de traction (12/14), et le désaccoupler de celui-ci, automatiquement,
l'unité de raccordement (15) comportant deux unités de liaison (72, 74) espacées l'une de l'autre, les deux unités de liaison espacées (72, 74) établissant chacune, en cas de liaison, une liaison détachable entre le corps de remorquage (8) et le câble de traction (12/14) ou les câbles de traction (12, 14) de façon à pouvoir utiliser une liaison électrique et/ou optique entre le corps de remorquage (8) et les câbles de remorquage (12, 14) et une liaison mécanique entre le corps de remorquage (8) et le câble de remorquage (12/14),
**caractérisé en ce qu'**une deuxième unité de liaison (74) des deux unités de liaison espacées est formée avec deux éléments de liaison pour établir la liaison mécanique entre le corps de remorquage (8) et le câble de traction (12/14), un élément de liaison qui se présente sous la forme de deux broches opposées (82) étant disposé de manière fixe au niveau du câble de traction (12/14) et un élément de liaison qui se présente sous la forme de rainures de guidage (84) étant disposé au niveau du corps de remorquage (8), la conformation des rainures de guidage opposées au niveau du corps de remorquage permettant d'établir une liaison de poussée rotative mobile par réception des deux broches.

2. Dispositif de transfert selon la revendication 1, **caractérisé par** un guide coulissant (68) dans le corps de remorquage (8) pour guider la ligne de remorquage (10) et le câble de traction (14) à travers le corps de remorquage (8).

3. Dispositif de transfert selon la revendication 2, **caractérisé en ce que**
le guide coulissant (68) est formé de manière tubulaire avec deux ouvertures axiales, l'ouverture arrière du guide coulissant (68) étant élargie en forme de cône.

4. Dispositif de transfert selon l'une des revendications précédentes, **caractérisé en ce que** la première unité de liaison (72), se présentant sous la forme d'un connecteur enfichable, est formée avec deux éléments de liaison (78, 80) destinés à établir la liaison électrique et/ou optique entre le corps de remorquage (8) et le câble de traction (12/14), un élément de liaison (78) étant disposé de manière fixe au câble de traction (12/14) et un élément de liaison (80) étant disposé dans le corps de remorquage (8).

5. Dispositif de transfert selon la revendication 4, **caractérisé en ce que** l'élément de liaison (78), fixé au câble de liaison (12/14), est formé avec une pièce moulée sensiblement cylindrique qui a un diamètre supérieur à celui du câble de liaison (12/14) et **en ce que**
l'élément de liaison (80) disposé au niveau du corps de remorquage (8) est formé de telle sorte qu'une face frontale de la pièce moulée de l'élément de liaison (78) fixé au câble de traction (12/14) est partiellement en appui sur l'élément de liaison (80) disposé au niveau du corps de remorquage (8).

6. Dispositif de transfert selon la revendication 4, **caractérisé par** une détection et une association automatiques d'une affectation de contact dans le cas de plus de deux points de contact des deux éléments de liaison (78, 80) pour établir une liaison électrique et/ou optique entre le corps de remorquage (8) et le câble de traction (12/14).

7. Dispositif de transfert selon l'une des revendications 4 à 6, **caractérisé par** un guide forcé qui est intégré dans le guide coulissant (68) pour permettre l'alignement automatique des éléments de liaison (78, 80).

8. Dispositif de transfert selon l'une des revendications 1 à 3, **caractérisé par** une portion (86), s'étendant horizontalement, des rainures de guidage (84) sur le corps de remorquage (8).

9. Dispositif de transfert selon l'une des revendications précédentes, **caractérisé en ce que** l'unité de raccordement (15) est formée avec une distance constante (76) entre les unités de liaison (72, 74), une unité de liaison (72, 74) ou les deux comportant une extrémité en forme d'entonnoir sur le côté se faisant face.

10. Dispositif de transfert selon l'une des revendications précédentes, **caractérisé par** un treuil (46) comprenant au moins deux tambours de treuil (52, 54) qui peuvent être actionnés par un moteur commun (48) .

11. Dispositif de transfert selon l'une des revendications précédentes, **caractérisé par** un dispositif déporté (30) comprenant un parallélogramme destiné à mettre le corps remorqué (8) dans l'eau (6) et à le récupérer.

12. Procédé de mise à la mer et de récupération d'un sonar remorqué (4), remorqué dans l'eau (6), qui comprend au moins un câble de traction (12/14), un corps de remorquage (8) et une ligne de remorquage (10),
le corps de remorquage (8) étant accouplé au câble de traction (12/14), ou désaccouplé du câble de traction (12/14), automatiquement au moyen d'une unité de raccordement (15),
**caractérisé en ce que**
l'unité de raccordement (15) comporte deux unités de liaison (72, 74), espacées l'une de l'autre, qui sont utilisées pour établir une liaison détachable entre le corps de remorquage (8) et le câble de traction (12/14) de façon à utiliser une liaison électrique et/ou optique entre le corps de remorquage (8) et le câble de traction (12/14) et une liaison mécanique entre le corps de remorquage (8) et le câble de traction (12/14),
**caractérisé en ce qu'**une deuxième unité de liaison (74) des deux unités de liaison espacées l'une de l'autre est formée avec deux éléments de liaison, la liaison mécanique étant établie entre le corps de remorquage (8) et le câble de traction (12/14), un élément de liaison qui se présente sous la forme de deux broches opposées (82) étant agencé de manière fixe au niveau du câble de traction (12/14) et un élément de liaison qui se présente sous la forme de rainures de guidage (84) étant disposé au niveau du corps de remorquage (8), la formation des rainures de guidage opposées au niveau du corps de remorquage permettant d'établir une liaison de poussée rotative mobile par réception des deux broches.

13. Procédé selon la revendication 12,
**caractérisé en ce que**
la mise à la mer et la récupération du sonar remorqué (4) sont surveillées au moyen d'un système vidéo.

14. Procédé selon la revendication 12 ou 13, **caractérisé en ce que** chaque étape du procédé de mise à la mer et de récupération du sonar remorqué (4) est affichée sur une console de commande.
